# EUROPÄISCHE PATENTSCHRIFT

(11) **EP 2 368 847 B1**
(45) Veröffentlichungstag und Bekanntmachung des Hinweises auf die Patenterteilung: **27.02.2013**
(21) Anmeldenummer: 11156780.6
(22) Anmeldetag: 03.03.2011
(51) Int. Cl.: C01B 33/035, H01M 4/96

(54) **Graphitelektrode**
Graphite electrode
Electrode de graphite

(30) Priorität: 19.03.2010 DE 102010003064
(43) Veröffentlichungstag der Anmeldung: 28.09.2011
(73) Patentinhaber: Wacker Chemie AG, 81737 München (DE)
(72) Erfinder: Kraus, Heinz, 84367, Zeilarn (DE); Sofin, Dr. Mikhail, 84489, Burghausen (DE)
(74) Vertreter: Killinger, Andreas

(56) Entgegenhaltungen:
- EP-A2- 0 142 476
- EP-A2- 2 161 241
- DE-A1- 2 435 174
- US-A- 1 444 961
- US-A- 5 284 640
- US-B2- 6 639 192

## Beschreibung

Die Erfindung betrifft eine Elektrode aus Kohlenstoff mit einer verbesserten Wärmeableitung zwischen Elektrode und Werkstück.

In der Industrie werden Graphitelektroden in vielen verschiedenen Anwendungen eingesetzt. Beispiele dafür sind die Aluminium- und Stahlgewinnung, die Elektrolyse von Salzschmelzen, die elektrolytische Zersetzung von chemischen Verbindungen, thermische Abscheidereaktionen, Lichtbogenschweißen, Messgeräte und vieles mehr.

Eine wichtige Anwendung stellt dabei die Abscheidung von Polysilicium nach dem Siemens Prozess dar, bei der hochreines elementares Silicium aus der Gasphase an der Oberfläche von Siliciumstäben abgeschieden wird. Dabei wird in einem Abscheidereaktor an der Oberfläche eines auf 900 bis 1200 °C beheiztem Silicium Dünnstabes, aus einer Mischung von Wasserstoff und Halogensilanen oder einer wasserstoffhaltigen Siliciumverbindung elementares Silicium aus der Gasphase abgeschieden.
Die Siliciumstäbe werden dabei im Reaktor von speziellen Elektroden gehalten, die in der Regel aus hochreinem Elektrographit bestehen. Jeweils zwei Dünnstäbe mit unterschiedlicher Spannungspolung an den Elektrodenhalterungen sind am anderen Dünnstabende mit einer Brücke zu einem geschlossenen Stromkreis verbunden. Über die Elektroden und deren Elektrodenhalterungen wird elektrische Energie zur Beheizung der Dünnstäbe zugeführt. Dabei wächst der Durchmesser der Dünnstäbe. Gleichzeitig wächst die Elektrode, beginnend an ihrer Spitze, in den Stabfuß der Siliciumstäbe ein. Nach dem Erreichen eines gewünschten Solldurchmessers der Siliciumstäbe wird der Abscheideprozess beendet, die glühenden Siliciumstäbe abgekühlt und ausgebaut.

Eine besondere Bedeutung kommt hier dem Material und der Form der Elektroden zu. Sie dienen zum einen der Halterung der Dünnstäbe, der Übertragung des Stromflusses in den Siliciumstab, aber auch der Wärmeübertragung und auch als sicherer Stand des heranwachsenden Stabes im Reaktor. Da der Trend zu immer längeren und schwereren Stäbe geht und die Stabpaare, die inzwischen mehrere hundert Kilo schwer sein können, nur über die Elektroden im Reaktor verankert sind, ist gerade die Wahl der Form und der Materialbeschaffenheit sehr wichtig.

Auch je nach der späteren Verwendung der so erzeugten Siliciumstäbe werden sehr unterschiedliche Anforderungen an die Siliciumstäbe und den Abscheideprozess, und somit an die Elektroden, gestellt. Wird beispielsweise das polykristalline Silicium später in Siliciumbruchstücken für Solar- und Elektronik Anwendungen verwendet, dürfen die Siliciumstäbe während oder nach dem Abscheideprozess im Abscheidereaktor nicht umfallen. Lange und dicke polykristalline Siliciumstäbe erhöhen die Wirtschaftlichkeit des Abscheideprozesses, aber auch das Risiko des Umfallens im Reaktor.

Elektroden nach dem Stand der Technik bestehen im unteren Teil aus einem zylindrischen Grundkörper und im oberen Teil aus einer Kegelspitze. An der Kegelspitze ist ein Hohlraum zur Aufnahme und Kontaktierung des Dünnstabs angebracht. Das untere Ende der Elektrode wird dabei in eine metallische Elektrodenhalterung gesetzt, über die der Strom zugeführt wird. Solche Elektroden sind allgemein bekannt und werden beispielsweise in der US-5,284,640 zur Siliciumabscheidung verwendet.

Als Werkstoff wird hauptsächlich Graphit für die Elektroden verwendet, da Graphit in sehr hoher Reinheit herstellbar ist und bei Abscheidebedingungen chemisch inert ist. Weiterhin hat Graphit einen sehr geringen spezifischen elektrischen Widerstand.

US-6,639,192 beschreibt eine Graphitelektrode mit herkömmlicher Form. Sie besteht aus einem zylindrischen Grundkörper mit kegelförmiger Spitze. Die Spitze enthält eine Bohrung zur Aufnahme und Kontaktierung des Dünnstabs. Die Elektrode ist aus einem Teil und somit aus einem Werkstoff (hier Elektrographit) mit homogenen Materialeinegschaften gefertigt. Sie hat insbesondere eine sehr hohe spezifische Wärmeleitfähigkeit. Nachteilig bei dieser Ausführungsform ist eine hohe Umfallquote vor und während der Abscheidung bis zum Erreichen des Enddurchmessers.

DE-2328303 beschreibt eine zylindrische Elektrode ohne Spitze. Der Trägerstab steckt dabei in einer Bohrung auf planer Fläche. Diese Elektrodenform hat bereits bei dünnem Stabdurchmesser aufgrund der vollzylindrischen Form eine sehr hohe Wärmeableitung. Damit die Stäbe bei dünnem Durchmesser während des Abscheideprozesses nicht umfallen, muß die Elektrode eine geringe Wärmeableitung haben, d.h. von geringem Durchmesser sein und der Elektrodenwerkstoff eine sehr niedrige spezifische Wärmeleitfähigkeit haben. Dicke Stäbe, wie sie heute üblich sind, können mit dieser Elektrodenform nicht abgeschieden werden, da aufgrund des geringen Elektrodendurchmessers und der niedrigen spezifischen Wärmeleitfähigkeit des Elektrodenwerkstoffs die für dicke Stabdurchmesser notwendige hohe Energie aus den Stabfüßen nicht abgeführt werden kann.

Graphitelektroden aus mehreren Schichten sind aus anderen Bereichen bekannt. Die Anordnung von verschiedenen Schichten zielt dort aber auf die Optimierung von chemischen Umsätzen. Aus US-3,676,324 ist beispielsweise eine zylindrische Grafitelektrode bekannt, die aus einem zylindrischen inneren und äußeren Teil besteht, wobei der innere Teil eine sehr hohe elektrische Leitfähigkeit besitzt und der äußere Teil ein poröser Graphit ist. Das Ziel dieser mehreren Schichten ist, hohe Spannungsverluste zu vermeiden und einen hohen chemischen Umsatz an der porösen Oberfläche zu erhalten. Eine ähnliche Elektrode mit zwei unterschiedlichen Schichten ist aus GB-2135334 bekannt, wobei hier die äußere poröse Schicht zur elektrolytischen Gewinnung von Fluor dient.

Nachteilig an allen aus dem Stand der Technik bekannten Elektroden ist, dass diese am Übergang zwischen Elektrode zum Siliciumstab oder im Siliciumstab in der Nähe der Elektrode mehr oder minder zur Rissbildung oder zu einer Abplatzung von Material neigen und somit den Siliciumstab instabil machen.

Umgefallene Chargen bedeuten einen großen wirtschaftlichen Schaden. So kann es beispielsweise beim Umfallen der Siliciumstabe zu Beschadigungen der Reaktorwandung kommen. Die umgefallenen Siliciumstäbe werden dabei durch den Kontakt mit dem Reaktor verunreinigt und müssen an der Oberfläche gereinigt werden. Zusätzlich können umgefallene Chargen nur mit erhöhtem Aufwand aus dem Reaktor ausgebaut werden. Dabei wird die Oberfläche des Siliciums weiter kontaminiert.

EP 2 161 241 A2 offenbart eine Vorrichtung zur Herstellung von polykristallinem Silicium durch Abscheiden auf einem Filamentstab, umfassend eine Elektrode aus Kohlenstoff, die den Filamentstab hält und einen Elektrodenhalter, und mittels Kühlmedium gekühlt wird, wobei die Elektrode umfasst: ein Filamentstab-Halteelement, eine Heizkappe zwischen Filamentstab-Halteelement und Elektrodenhalter, einen ringförmigen Kappenschutz, der die obere Fläche der Heizkappe bedeckt, und der eine Öffnung bis zum unteren Ende des Filamentstab-Halteelements aufweist.

EP 0 142 476 A2 offenbart Kohlenstoffelektrode mit einer "Composite"-Konstruktion, die aus einem äußeren Teil oder einer "Schale" aus einem ersten Material (A) und einem inneren Bereich oder "Kern" aus einem zweiten Material (B) besteht, wobei sich mechanische und / oder thermische und / oder elektrische Eigenschaften von Material (A) und Material (B) unterscheiden.

US 1 444 961 A offenbart eine Elektrode mit einem Körper aus Kohlenstoff, umfassend eine relativ dichte und im wesentlichen reine Kohlenstoff-Hülle und einen Kern dieser Hülle bestehend aus relativ weniger dichten kohlenstoffhaltigem Füllmaterial und einem kohlenstoffhaltigem Bindemittel, das ein guter elektrischer Leiter und eine schlechter Wäremeleiter ist.

Aufgabe der Ertindung war es, eine Elektrode bereitzustellen, mit der die Umfallquote gegenüber Elektroden herkömmlicher Bauart deutlich reduziert wird.

Überraschenderweise wurde gefunden, dass eine Elektrode aus mehreren verschiedenen Zonen, bestehend aus Materialien mit verschiedenen Wärmeleitfähigkeiten, die aus dem Stand der Technik bekannten Nachteile nicht besitzt.

Gegenstand der Erfindung ist eine Elektrode aus Kohlenstoff, dadurch gekennzeichnet, dass die Elektrode aus mindestens 2 verschiedenen Zonen unterschiedlicher spezifischer Wärmeleitfähigkeit besteht, wobei eine äußere Zone (A) die Basis der Elektrode bildet und eino oder mehrere innere Zonen trägt, wobei die innerste Zone (B) oben aus der Zone (A) herausragt, die niedrigste spezifische Wärmeleitfähigkeit aufweist und eine Vorrichtung zur Aufnahme eines Filamentstabs besitzt.

Die erfindungsgemäße Elektrode besteht aus mindestens 2 Teilen, einer Elektroden-Basis (A) und mindestes eine in diese Basis eingesetze weitere innere Zone (B). Die Elekrode kann zusätzlich zwischen der Zone (A) und der Zone (B) auch noch weitere Zonen aufweisen, wobei die innerste Zone den Dünnstab aufnimmt und elektrisch kontaktiert. Einsätze und Basis sind dabei aus mindestens 2 verschiedenen Werkstoffen aufgebaut, wobei der innerste Einsatz (Zone (B)) aus dem Werkstoff mit der niedrigsten Wärmeleitfähigkeit besteht. Die weiteren Einsätze sind aus Werkstoffen mit höheren spezifischen Wärmeleitfähigkeiten gefertigt, wobei die spezifische Wärmeleitfähigkeit idealerweise von innen nach aussen ansteigt.

Die erfindungsgemäße Elektrode kann für alle Anwendungen eingesetzt werden, bei denen verschiedene spezifische Wärmeleitfähigkeiten in der Elektrode und auf deren Oberfläche benötigt werden. Bevorzugt wird die erfindungsgemäße Elektrode bei der Abscheidung von Polysilicium verwendet.

Durch die Einteilung in verschiedene Zonen aus unterschiedlichen Materialien und verschiedenen Wärmeleitfähigkeiten kann die Elektrode optimal auf die verschiedenen Anforderungen beim Wachstum des darauf befestigten Materials, beispielsweise eines Siliciumstabes, angepasst werden. Beim Beginn des Wachstums und damit bei dünnem Stabdurchmessern wächst der Stabfuß zuerst nur auf den Einsatz der niedrigeren Wärmeleitfähikeit. Wegen der geringen Wärmeableitung über den Einsatz (Zone B) aufgrund des verwendeten Graphits mit niedriger spezifischer Wärmeleitfähigkeit wird bei Beginn des Wachstums über die gesamte Elektrode und deren Elektrodenhalterung wenig Wärme abgeführt und man erhält bei noch dünnen Stabdurchmessern eine hohe Temperatur an der Verbindung der Elektrode zum Siliciumstab. Kältere Bereiche am Stabfuß, an denen aufgrund zu niedriger Temperatur Ätzprozesse auftreten können, sind nicht vorhanden. Der Stabfuß verwächst damit schnell und ohne Fehler mit der Elektrodenspitze in Zone (B). Ein Umfallen bei dünnem Stabdurchmesser vor oder während des Abscheideprozesses wird dadurch vollständig verhindert. Bei fortschreitendem Abscheideprozess und dicker werdenden Stäben wächst der Stabfuß weiter über den Einsatz (B) auf die Basis (A) und in die Basis ein. Aufgund der höheren Wärmeleitfähigkeit der Basis kann die Energie aus dem Stabfuß sehr gut abgeleitet werden. Der Temperaturgradient am Stabfuß und thermische Verspannungen sind damit stark reduziert. Risse und Absprünge am Stabfuß treten deutlich weniger auf.

Die verschiedenen Zonen der erfinderischen Elektrode können direkt bei der Herstellung der Elektrode eingearbeitet werden oder als loser oder wechselbarer Einsatz ausgebildet sein. Wenn die Elektrode aus einem Stück gefertigt wird, kann der Übergang der verschiedenen Zonen und Materialien auch fließend sein.

Die innere Zone (B) ist vorzugsweise nach oben spitz ausgebildet und steckt mit dem der Spitze abgewandten Ende in der Basis. Die Verbindung der Basis zum Einsatz kann eine konische, zylindrische oder eine andere beliebige Form haben. In der Praxis hat sich eine konische Steckverbindung bewährt, da mit einer konischen Verbindung sichergestellt wird, dass Basis und Einsatz eine mechanisch feste Verbindung bilden und einen guten thermischen und elektrischen Kontakt haben. Zwischen die Zonen A und B kann zur Verbesserung der Leitfähigkeit auch ein Zusatzstoff eingebracht werden.

Das aus der Elektrode herausragende Ende des Einsatzes bildet die Elektrodenspitze. Diese besitzt eine Vorrichtung zur Aufnahme und Kontaktierung des Dünnstabs. Die Vorrichtung kann zylindrisch, konisch oder eine andere beliebige Form haben. Entsprechend hat das später im Abscheideprozess eingesetzte Dünnstabende eine zylindrische, konische oder andere beliebige, zur Vorrichtung passenden Form.

Zur Aufnahme und Kontaktierung der erfindungsgemäßen Elektrode im Abscheidereaktor können beliebige aus dem Stand der Technik bekannte Elektrodenhalterungen verwendet werden. Zur Verbesserung der Wärmeableitung der gesamten Elektrode kann die Elektrodenhalterung auch einen zusätzlichen Kühlkörper aufweisen, der am unteren Ende der Basis angeordnet ist und/oder in die Basis hineinragt. Dieser Kühlkörper ist in der Regel Bestandteil der Elektrodenhalterung und vorzugsweise aus einem Stück mit der Elektrodenhalterung gefertigt. Als Materialien eignen sich alle bekannten Materialien aus gut wärme- und elektrisch leitendem Material, wie beispielsweise Metall. Der Kühlkörper wird mit einem geeigneten Wärmeträger, z.B. Wasser, gekühlt. Wichtig ist ein sehr guter thermischer und elektrischer Kontakt des Kühlkörpers mit der Basis, damit hohe und über dem Umfang des Einsatzes gleichmäßige elektrische und thermische Leitfähigkeit besteht. Die Form des Kühlkörpers kann beliebig sein, bevorzugt wird eine zylindrische oder konische Form, besonders bevorzugt eine konische Form.

Durch die erfindungsgemäße Elektrode konnte das Problem von umfallenden Stäben im Reaktor gleichzeitig bei dicken und dünnen Stäben signifikant verbessert werden. Die Umfallquoten während des Abscheideprozesses sowohl bei dünnem Durchmesser als auch bei erreichtem Enddurchmesser und beim Abstellen der Chargen sind deutlich gegenüber dem Einsatz von Elektroden nach dem Stand der Technik reduziert. Abplatzungen an den Stabfüßen treten nahezu nicht auf. Zusätzlich besteht gegenüber den aus dem Stand der Technik bekannten Elektroden eine geringe Wärmeabfuhr bei dünnem Stabdurchmesser und ein sehr gutes Aufwachsverhalten des Stabfußes auf die Elektrode bei dünnem Stabdurchmesser. Gleichzeitig besitzt die erfindungsgemäße Elektrode eine hohe Wärmeabfuhr bei dickem Stabdurchmesser.

Als Material für die erfindungsgemäße Elektrode können alle bekannten Arten von Kohlenstoff verwendet werden, die für den Einsatz als Elektroden geeignet sind. Aus Reinheitsgründen wird bevorzugt ein hochreiner Elektrographit mit unterschiedlichen Wärmeleitfähigkeiten eingesetzt. Es können aber auch andere Materialien wie beispielsweise Siliciumcarbid, Carbon Fiber reinforced Carbon (CFC) Verbundwerkstoffe, Wolfram oder andere hochschmelzende Metalle verwendet werden. Auch eine Beschichtung der Elektrode mit Materialien wie beispielsweise Silicium, Siliciumcarbid, Siliciumnitrid, Pyrokohlenstoff, Glaskohlenstoff oder Silicene, d.h. Nano Silicium, ist möglich. Bevorzugt wird dabei eine Schichtdicke kleiner 100 µm.

Die spezifische Wärmeleitfähigkeit des verwendeten Graphitmaterials, gemessen bei Raumtemperatur nach DIN 51908, der Zone (A) der erfindungsgemäßen Elektrode beträgt 80 bis 200 W/ (m*K), bevorzugt 100 bis 180 W/(m*K) und besonders bevorzugt 130 bis 160 W/(m*K). Die spezifische Wärmeleitfähigkeit der inneren Zone (B) beträgt 20 bis 100 W/(m*K), bevorzugt 30 bis 80 W/(m*K) und besonders bevorzugt 30 bis 70 W/(m*K).

Der spezifische elektrische Widerstand des verwendeten Graphitmaterials der Zone A der erfindungsgemäßen Elektrode, gemessen bei Raumtemperatur nach DIN 51911, liegt zwischen 15 und 5 µOhm*m, bevorzugt zwischen 10 und 6 µOhm*m und besonders bevorzugt zwischen zwischen 9 und 7 µOhm*m. Der spezifische elektrische Widerstand der inneren Zone B beträgt 30 bis 10 µohm*m, bevorzugt 25 bis 15 µOhm*m, besonders bevorzugt 25 bis 17 µOhm*m

Der arithmetische Mittelwert der Oberflächenrauhigkeit Ra des verwendeten Graphitmaterials, gemessen nach DIN EN ISO 4287 der erfindungsgemäßen Elektrode liegt zwischen 1 und 20 µm, bevorzugt zwischen 1 und 8 µm, besonders bevorzugt zwischen 1 und 5 µm bei einer Gesamthöhe des Rauheitsprofils Rt zwischen 10 und 200 µm, bevorzugt zwischen 10 und 150 µm, besondes bevorzugt zwischen 10 und 100 µm und einer gemittelten Rautiefe Rz zwischen 8 und 160 µm, bevorzugt zwischen 8 und 120 µm, besonders bevorzugt zwischen 8 und 80 µm.

Die Druckfestigkeit des verwendeten Graphitmaterials, gemessen bei Raumtemperatur nach DIN 51910, liegt zwischen 40 und 250 MPa, bevorzugt zwischen 50 und 200 MPa, besonders bevorzugt zwischen 50 und 150 MPa.

Die Biegefestigkeit des verwendeten Graphitmaterials, gemessen bei Raumtemperatur nach DIN 51902, liegt zwischen 10 und 100 MPa, bevorzugt zwischen 15 und 80 MPa, besonders bevorzugt zwischen 20 und 70 MPa.

Das Elastizitätsmodul des verwendeten Graphitmaterials, gemessen bei Raumtemperatur nach DIN 51915, liegt zwischen 1 und 20 GPa, bevorzugt zwischen 2 und 15 GPa, besonders bevorzugt zwischen 3 und 15 GPa.

Der lineare thermische Ausdehnungskoeffizient des verwendeten Graphitmaterials der verschiedenen Zonen liegt im Temperaturbereich von 20 bis 1000 °C, gemessen nach DIN 51909, liegt zwischen 2*10⁻⁶ und 10*10⁻⁶ 1/K, bevorzugt zwischen 3*10⁻⁶ und 8*10⁻⁶ 1/K, besonders bevorzugt zwischen 3,5*10⁻⁶ und 7*10 1/K

Die offene Porosität des verwendeten Graphitmaterials, gemessen nach DIN 51918, liegt zwischen 5 und 25%, bevorzugt zwischen 10 und 25%, besonders bevorzugt zwischen 10 und 20%.

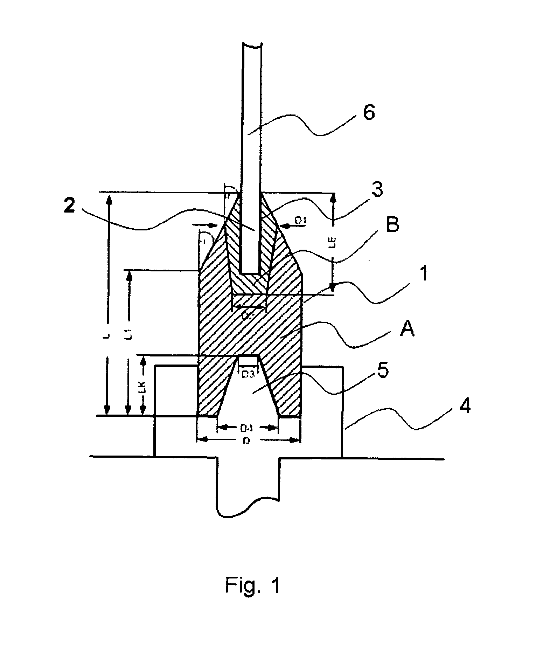

Figur 1 zeigt beispielhaft eine Ausführungsform der erfindungsgemäßen Elektrode. Die Basis der Elektrode bildet die als Rundkörper (1) ausgebildete Zone (A). Am oberen Ende besitzt diese eine Aufnahme (2) für die innere Zone (B), die im Bild beispielhaft mit einer konischen Verbindung zwischen den Zonen dargestellt wurde. Zusammen bilden die äußere Zone und der Einsatz einen gemeinsamen Kegel, der die Elektrodenspitze bildet. Die aus der äußeren Zone (A) herausragende Spitze der inneren Zone (B) besitzt eine Aufnahme (3) für einen Filamtenstab (6). Die Elektrode sitzt auf einem Elektrodenhalter (4), der optional noch mit einer Kühlung ausgestattet sein kann. Der Kühlkörper kann auch in die Basis der Elektrode hinein reichen (5).

Die Höhe der gesamten Elektrode (L), bestehend aus äußerer und innerer Zone, beträgt 70 bis 200 mm, bevorzugt 70 bis 150 mm und besonders bevorzugt 80 bis 130 mm.
Die zylindrische Länge (L1) beträgt 40 bis 165 mm, bevorzugt 45 bis 100 mm und besonders bevorzugt 50 bis 80 mm.
Der Durchmesser der Elektrode (D) beträgt 30 bis 100 mm, bevorzugt 40 bis 80 mm und besonders bevorzugt 45 bis 70 mm. Der Konuswinkel (α) beträgt 15° bis 40°, bevorzugt 20° bis 35° und besonders bevorzugt 22° bis 32°.

Die Länge des Einsatzes (LE) beträgt 30 bis 90 mm, bevorzugt 35 bis 80 mm und besonders bevorzugt 35 bis 65 mm.
Der Durchmesser des Einsatzes (D1) beträgt an seiner breitesten Stelle 20 bis 50 mm, bevorzugt 25 bis 45 mm und besonders bevorzugt 30 bis 40 mm.
Der Durchmesser des Einsatzes an seinem unteren Ende (D2) beträgt 15 bis 40 mm, bevorzugt 20 bis 40 mm und besonders bevorzugt 20 bis 35 mm.

Der Durchmesser des Kühlkörpers beträgt am oberen Ende (D3) 10 bis 60 mm, bevorzugt 10 bis 50 mm und besonders bevorzugt 10 bis 45 mm und am unteren Ende(D4) 10 bis 60 mm, bevorzugt 10 bis 50 mm und besonders bevorzugt 10 bis 45 mm.
Die Länge des Kühlkörper (LK) beträgt 20 bis 80 mm, bevorzugt 20 bis 60 mm und besonders bevorzugt 30 bis 50 mm.

Anhand der folgenden Beispiele soll die Erfindung näher erläutert werden.

In einem Siemens Abscheidereaktor wurden polykristalline Siliciumstäbe mit einem Durchmesser von 140 bis 200 mm abgeschieden. Dabei wurden mehrere Ausführungen an Elektroden getestet. Die Parameter des Abscheideprozesses waren bei allen Versuchen jeweils gleich. Die Versuche unterscheideten sich nur in der Ausführung der Elektrode. Die Ascheidetemperatur lag im Chargenverlauf zwischen 1000 °C und 1100 °C. Während des Abscheideprozesses wurde ein Feed bestehend aus einer oder mehreren chlorhaltigen Silanverbindungen der Formel SiHₙCl₄₋ₙ (mit n = 0 bis 4) und Wasserstoff als Trägergas zugegeben.

### Vergleichsbeispiel 1:

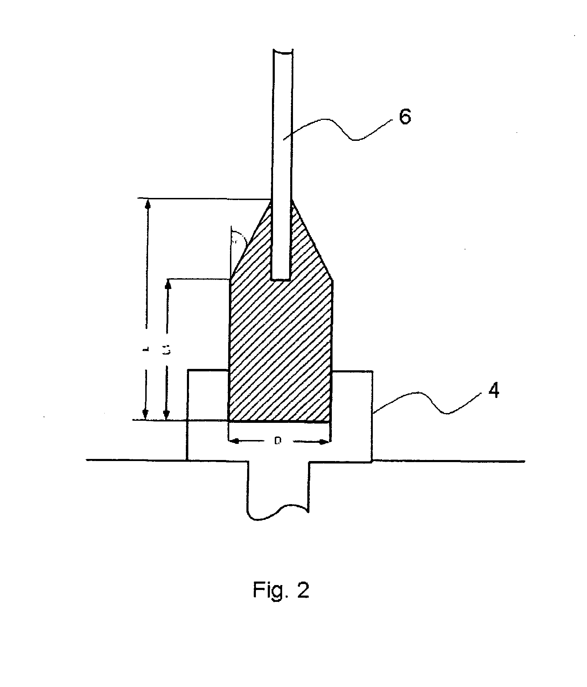

Zur Abscheidung wurden Elektroden nach dem Stand der Technik verwendet (FIG. 2). Die verwendeten Elektroden bestanden aus höchstreinem Elektrographit mit einer spezifischen Wärmeleitfähigkeit von 80 W/(m*K). Die Gesamtlänge (L) betrug 118 mm und die zylindrische Länge (L1) 72 mm. Der Konuswinkel (α) betrug 32° und der Durchmesser (D) 65 mm. Es wurde eine Elektrode ohne Kühlkörper verwendet.
Am Ende der Reaktion wurde der Reaktor geöffnet und die Anzahl der Chargen mit umgefallenen Polysiliciumstäben notiert. Von 100 Chargen waren 20 Chargen nach Erreichen des Enddurchmessers umgefallen.

### Vergleichsbeispiel 2:

Zur Abscheidung wurden Elektroden nach dem Stand der Technik verwendet (FIG. 2). Die verwendeten Elektroden bestanden aus höchstreinem Elektrographit mit einer spezifischen Wärmeleitfähigkeit von 150 W/(m*K). Die Gesamtlänge (L) betrug 118 mm und die zylindrische Länge (L1) 72 mm. Der Konuswinkel (α) betrug 32° und der Durchmesser (D) 65 mm. Es wurde eine Elektrode ohne Kühlkörper verwendet.
Am Ende der Reaktion wurde der Reaktor geöffnet und die Anzahl der Chargen mit umgefallenen Polysiliciumstäben notiert.
Von 100 Chargen waren 10 Chargen vor Erreichen des Enddurchmessers während der Abscheidung umgefallen und 2 Chargen nach Erreichen des Enddurchmessers umgefallen.

### Beispiel 1:

Zur Abscheidung wurden erfindungsgemäße Elektroden mit Einsatz und Kühlkörper verwendet (FIG. 1). Zone (A) der verwendeten Elektroden bestand aus höchstreinem Elektrographit mit einer spezifischen Wärmeleitfähigkeit von 135 W/(m*K). Für die innere Zone (B) wurde ein höchstreiner Elektrographit mit einer spezifischen Wärmeleitfähigkeit von 50 W/(m*K) verwendet.
Die Elektrode hatte folgende Geometrie:

| | |
|---|---|
| Gesamtlänge (L): | 118 mm |
| Zylindrische Länge (L1): | 72 mm |
| Konuswinkel (α): | 32° |
| Durchmesser (D): | 65 mm |
| Länge Einsatz (LE): | 46 mm |
| Durchmesser Einsatz (D1): | 37 mm |
| Durchmesser Einsatz (D2): | 22 mm |
| Durchmesser Kühlkörper (D3): | 25 mm |
| Durchmesser Kühlkörper (D4): | 45 mm |
| Länge Kühlkörper (LK): | 50 mm |

Am Ende der Reaktion wurde der Reaktor geöffnet und die Anzahl der Chargen mit umgefallenen Polysiliciumstäben notiert. Von 100 Chargen waren 0 Chargen während der Abscheidung vor Erreichen des Enddurchmessers umgefallen und 3 Chargen nach Erreichen des Enddurchmessers umgefallen.

## Patentansprüche

1. Elektrode aus Kohlenstoff, **dadurch gekennzeichnet, dass** die Elektrode aus mindestens 2 verschiedene Zonen unterschiedlicher spezifischer Wärmeleitfähigkeit besteht, wobei eine äußere Zone (A) die Basis der Elektrode bildet und eine oder mehrere innere Zonen trägt, wobei die innerste Zone (B) oben aus der Zone (A) herausragt und eine niedrigere spezifische Wärmeleitfähigkeit aufweist wie Zone (A).

2. Elektrode nach Anspruch 1, **dadurch gekennzeichnet, dass** die verschiedenen Zonen derart angeordnet sind, dass die innerste Zone ganz oder teilweise von einer Zone mit höherer Wärmeleitfähigkeit umgeben ist.

3. Elektrode nach Anspruch 1 bis 2, **dadurch gekennzeichnet, dass** die innere Zone (B) als loser oder wechselbarer Einsatz ausgebildet ist.

4. Elektrode nach 3, **dadurch gekennzeichnet, dass** die Zone (B) mittels einer konischen Steckverbindung in der äußeren Zone verbunden ist.

5. Elektrode nach Anspruch 1 bis 4, **dadurch gekennzeichnet, dass** die Zonen gemeinsamen thermischen und elektrischen Kontakt haben.

6. Elektrode nach Anspruch 1 bis 5, **dadurch gekennzeichnet, dass** die Elektrode an ihrer Basis mit einem Kühlkörper gekoppelt wird.

7. Elektrode nach Anspruch 1 bis 6, **dadurch gekennzeichnet, dass** die Elektrode aus hoch- oder höchstreinem Elektrographit mit unterschiedlichen Wärmeleitfähigkeiten besteht.

8. Elektrode nach Anspruch 1 bis 7, **dadurch gekennzeichnet, dass** das verwendete Kohlenstoffmaterial einen oder mehrere der folgenden Parameter aufweist:
a.) spezifische Wärmeleitfähigkeit 20 bis 200 W/(m*K),
b.) spezifischer elektrischer Widerstand 30 bis 5 µOhm*m,
c.) arithmetischer Mittelrauwert der Oberflächenrauigkeit Ra 1 bis 20 µm bei einer Gesamthöhe des Rauheitsprofils Rt zwischen 10 und 200 µm und einer gemittelten Rautiefe Rz zwischen 8 und 160 µm,
d.) Druckfestigkeit 40 bis 250 MPa,
e.) Biegefestigkeit 10 bis 100 MPa,
f.) Elastizitätsmodul 1 bis 20 GPa,
g.) linearer thermischer Ausdehnungskoeffizient im Temperaturbereich 20 bis 1000 °C, 2*10⁻⁶ bis 10*10⁻⁶ 1/K,
h.) offene Porosität 5 bis 25%.

9. Verfahren zur Herstellung von polykristallinem Silicium durch Abscheidung von hochreinem elementaren Silicium aus der Gasphase an der Oberfläche von Siliciumstäben, **dadurch gekennzeichnet, dass** die Siliciumstäbe im Reaktor von Elektroden gemäß einem oder mehreren der Ansprüche 1 bis 8 gehalten werden.

## Claims

1. Electrode composed of carbon, **characterized in that** the electrode consists of at least two different zones having a different specific thermal conductivity, wherein an outer zone (A) forms the base of the electrode and carries one or more inner zones, wherein the innermost zone (B) projects from the zone (A) at the top, has the lowest specific thermal conductivity and has a device for receiving a filament rod.

2. Electrode according to Claim 1, **characterized in that** the different zones are arranged in such a way that the innermost zone is wholly or partly surrounded by a zone having a higher thermal conductivity.

3. Electrode according to Claims 1 to 2, **characterized in that** the inner zone (B) is embodied as a loose or changeable insert.

4. Electrode according to Claim 3, **characterized in that** the zone (B) is connected by means of a conical plug connection in the outer zone.

5. Electrode according to Claims 1 to 4, **characterized in that** the zones have common thermal and electrical contact.

6. Electrode according to Claims 1 to 5, **characterized in that** the electrode is coupled to a heat sink at its base.

7. Electrode according to Claims 1 to 6, **characterized in that** the electrode consists of high- or ultrahigh-purity electrographite having different thermal conductivities.

8. Electrode according to Claims 1 to 7, **characterized in that** the carbon material used has one or more of the following parameters:
a.) specific thermal conductivity 20 to 200 W/ (m*K),
b.) electrical resistivity 30 to 5 µOhm*m,
c.) arithmetic mean roughness value of the surface roughness Ra 1 to 20 µm given a total height of the roughness profile Rt between 10 and 200 µm and an averaged roughness depth Rz between 8 and 160 µm,
d.) compressive strength 40 to 250 MPa,
e.) flexural strength 10 to 100 MPa,
f.) modulus of elasticity 1 to 20 GPa,
g.) coefficient of linear thermal expansion in the temperature range 20 to 1000°C, 2*10⁻⁶ to 10*10⁻⁶ 1/K,
h.) open porosity 5 to 25%.

9. Method for producing polycrystalline silicon by depositing high-purity elemental silicon from the gas phase on the surface of silicon rods, **characterized in that** the silicon rods are held in the reactor by electrodes according to one or more of Claims 1 to 8.

## Revendications

1. Électrode en carbone, **caractérisée en ce que** l'électrode se compose d'au moins 2 zones différentes de conductibilités thermiques spécifiques différentes, une zone extérieure (A) formant la base de l'électrode et portant une ou plusieurs zones intérieures, la zone la plus à l'intérieur (B) faisant saillie en haut hors de la zone (A), présentant la conductibilité thermique spécifique la plus faible et possédant un dispositif pour accueillir une barre de filament.

2. Électrode selon la revendication 1, **caractérisée en ce que** les différentes zones sont disposées de telle sorte que la zone la plus à l'intérieur est totalement ou partiellement entourée d'une zone ayant une conductibilité thermique plus élevée.

3. Électrode selon les revendications 1 à 2, **caractérisée en ce que** la zone intérieure (B) est réalisée sous la forme d'un insert amovible ou remplaçable.

4. Électrode selon la revendication 3, **caractérisée en ce que** la zone (B) est reliée au moyen d'une connexion enfichable conique dans la zone extérieure.

5. Électrode selon les revendications 1 à 4, **caractérisée en ce que** les zones possèdent un contact thermique et électrique commun.

6. Électrode selon les revendications 1 à 5, **caractérisée en ce que** l'électrode est couplée à sa base avec un radiateur.

7. Électrode selon les revendications 1 à 6, **caractérisée en ce que** l'électrode se compose d'électrographite de grande pureté ou ultra-pur ayant des conductibilités thermiques différentes.

8. Électrode selon les revendications 1 à 7, **caractérisée en ce que** le carbone utilisé présente un ou plusieurs des paramètres suivants :
a) conductibilité thermique spécifique de 20 à 200 W/(m*K),
b) résistance électrique spécifique de 30 à 5 µOhm*m,
c) indice de rugosité moyen arithmétique de la rugosité de surface Ra de 1 à 20 µm avec une hauteur totale du profil de rugosité Rt entre 10 et 200 µm et une profondeur de rugosité Rz moyenne entre 8 et 160 µm,
d) résistance à la compression de 40 à 250 MPa,
e) résistance à la flexion de 10 à 100 MPa,
f) module d'élasticité de 1 à 20 GPa,
g) coefficient de dilatation thermique linéaire dans la plage de températures de 20 à 1000 °C, de 2*10⁻⁶ à 10*10 1/K,
h) porosité ouverte de 5 à 25 %.

9. Procédé de fabrication de silicium polycristallin par précipitation de silicium élémentaire de grande pureté à partir de la phase gazeuse sur la surface de barres en silicium, **caractérisé en ce que** les barres en silicium dans le réacteur sont maintenues par des électrodes selon une ou plusieurs des revendications 1 à 8.
